Europäisches Patentamt

European Patent Office

Office européen des brevets

(19)

(11) Veröffentlichungsnummer: **0 239 563 B1**

(12) **EUROPÄISCHE PATENTSCHRIFT**

(45) Veröffentlichungstag der Patentschrift: **11.03.92**

(21) Anmeldenummer: **87890054.7**

(22) Anmeldetag: **20.03.87**

(51) Int. Cl.5: **G01B 7/16**, G01L 1/22

(54) **Messwertaufnehmer.**

(30) Priorität: **20.03.86 AT 748/86**

(43) Veröffentlichungstag der Anmeldung:
**30.09.87 Patentblatt 87/40**

(45) Bekanntmachung des Hinweises auf die
Patenterteilung:
**11.03.92 Patentblatt 92/11**

(84) Benannte Vertragsstaaten:
**BE CH DE ES FR GB GR IT LI LU NL SE**

(56) Entgegenhaltungen:
**DE-A- 3 101 575**
**GB-A- 679 290**
**GB-A- 1 029 776**
**GB-A- 2 030 300**
**US-A- 4 420 985**

**PATENT ABSTRACTS OF JAPAN, Band 6, Nr.
75 (P-114)[953], 12. Mai 1982; & JP-A-57 13
305 (NIPPON CEMENT K.K.) 23-01-1982**

(73) Patentinhaber: **Hackl, Erich, Dipl.-Ing.
Sterneckstrasse 55
A-5020 Salzburg(AT)**

Patentinhaber: **Golser, Johann, Dipl.-Ing. Dr.
Sterneckstrasse 55
A-5020 Salzburg(AT)**

(72) Erfinder: **Rabensteiner, Klaus, Dipl.-Ing.
Gailitz 152
A-9601 Arnoldstein(AT)**
Erfinder: **Schubert, Peter, Dipl.-Ing. Dr.
Huettenbergstrasse 4
A-5020 Salzburg(AT)**
Erfinder: **Golser, Johann, Dipl.-Ing. Dr.
Sterneckstrasse 55
A-5020 Salzburg(AT)**
Erfinder: **Feder, Georg, Dipl.-Ing. Dr.
Pichlmayergasse 3
A-8700 Leoben(AT)**

(74) Vertreter: **Müllner, Erwin, Dr. et al
Patentanwälte Dr. Erwin Müllner Dipl.-Ing.
Werner Katschinka Postfach 159 Weihburggasse 9
A-1010 Wien(AT)**

EP 0 239 563 B1

## Beschreibung

Die Erfindung betrifft einen Meßwertaufnehmer zur Messung von Dehnungen in Bauwerken aus Beton mit einem axial beanspruchbaren, geraden, als Hohlprofil ausgebildeten Tragkörper, der von einer Hülle umgeben ist und an den mindestens zwei steife Querelemente angeschlossen sind.

In vielen Fällen wird Beton durch das Hooke'sche Gesetz beschrieben. Diese Näherung ist in jenen Fällen vertretbar, in denen ein Betontragwerk nur geringen Spannungen im Verhältnis zur momentanen Druckfestigkeit ausgesetzt wird und der Belastungsbeginn relativ spät erfolgt. Bei frühzeitiger Belastung auf hohem Spannungsniveau muß hingegen das rheologische Materialverhalten in der statischen Berechnung berücksichtigt werden.

Es ist bekannt, daß unter bestimmten Bedingungen Beton ein ausgesprochen plastisches Verformungsverhalten zeigt und die zeitabhängigen Verformungen ein Vielfaches der sofort auftretenden elastischen ausmachen können. Dieser Umstand ist in gewissen Anwendungsfällen, beispielsweise bei der Bemessung von Spritzbetonschalen im Tunnelbau, von wesentlicher Bedeutung für das Ergebnis der Berechnung und somit für die Sicherheit und die Wirtschaftlichkeit des Bauwerkes.

Aufgrund der Vielzahl sich beeinflussender Parameter müssen die getroffenen Rechenannahmen durch Messungen am Bauwerk überprüft werden. Dabei ist insbesondere die möglichst vollständige Erfassung der Dehnungen an ausgewählten Stellen von hoher Aussagekraft.

Es ist bereits bekannt, Dehnungsmeßgeber mit rohrförmigem Verformungskörper als Träger für Dehnungsmeßstreifen zur Messung von Dehnungen in Bauwerken aus Beton zu verwenden. In der Regel weisen solche Aufnehmer eine höhere Dehnsteifigkeit als die von ihnen verdrängte Materialsäule auf, insbesondere bei Verwendung von Stahlrohren mit geringem Durchmesser. In diesem Falle wird eine verlustfreie Dehnungsübertragung vom Beton auf den Träger der Dehnungsmeßstreifen verhindert.

Es ist weiters aus der DE-A-3 101 575, von der diese Erfindung ausgeht, bekannt, daß Dehnungsmeßgeber mit einem Hohlprofil als Verformungskörper konstruiert wurden, bei denen die durch die Außenkontur des Hohlprofiles definierte Querschnittsfläche und die Materialquerschnittsfläche des Hohlprofiles im Verhältnis des E-Moduls des Materials des Tragkörpers zum E-Modul des Betons gewählt ist. Dadurch soll erreicht werden, daß die Dehnsteifigkeit des Aufnehmers gleich der Dehnsteifigkeit des verdrängten Betons ist, sodaß die Verformungseigenschaften im Bereich des Aufnehmers nicht verändert werden und der Kraftfluß durch den Aufnehmer nicht gestört wird.

Jedoch muß bei dieser Konstruktion bedacht werden, daß sich die Festigkeits und Verformungseigenschaften von Beton in Abhängigkeit von der Zeit und der Beanspruchung ändern. Es ist daher nur zu einem einzigen Zeitpunkt möglich, unverzerrte Meßwerte zu erhalten. Diese Konstruktion erlaubt also nicht, ab einem frühen Zeitpunkt zu messen und berücksichtigt nicht die zeitabhängigen Verformungskennwerte des Betons. Auch können Kriechdehnungen nicht verlustfrei erfaßt werden.

Aus der JP-A-5 713 305 ist - um diese Nachteile zu vermeiden - bekannt, daß das Verhältnis "Fläche der Querelemente" zu "Querschnitt des Tragkörpers" möglichst groß und der Elastizitätsmodul des Tragkörpers möglichst gering gewählt werden soll. (Gemäß diesem Dokument ist keine Hülle um den Tragkörper vorgesehen.)

Wendet man diese Erkenntnis (geringer Elastizitätsmodul des Tragkörpers) konsequent bei einem Meßwertaufnehmer mit Hülle an, so ergibt sich das Problem, daß die Knicksteifigkeit des Tragkörpers nicht mehr ausreichend ist, da der Beton infolge der Hülle das Knicken des Tragelementes nicht verhindern kann. Bei stärkeren Schrumpfungen des Betons kann daher das Tragelement knicken.

Es ist Aufgabe der vorliegenden Erfindung, diesen Nachteil zu beseitigen. Diese Aufgabe wird erfindungsgemäß dadurch gelöst, daß bei einem Meßwertaufnehmer der eingangs genannten Art die Dehnsteifigkeit des Tragkörpers kleiner ist als das Produkt der umschriebenen Hüllenquerschnittsfläche mit dem Elastizitätsmodul des Meßobjektes, daß bei zumindest zwei Querelementen deren quer zur Tragkörperachse gemessene Länge größer ist als das 3-fache der Quadratwurzel aus der Hüllenquerschnittsfläche und daß in das Hohlprofil des Tragkörpers ein anderes Profil aus biegesteifem Material, vorzugsweise Stahl, eingeschoben ist, wobei die Gesamtlänge dieses Profiles kürzer als das Hohlprofil des Tragkörpers ist.

Das zusätzliche Profil verhindert das Knicken, kann aber, weil es in das Hohlprofil nur eingeschoben (und nicht mit ihm verbunden) ist und kürzer als dieses ist, die Dehnung oder Stauchung des Hohlprofils nicht beeinflussen. Der dabei entstehende Hohlraum wird mit elastischem Schaumstoff gefüllt, dessen Stauchbehinderung im Verhältnis zur direkt (axial) von den Querelementen aufgebrachten Zwängungskraft verschwindend klein ist.

Durch die beiden entsprechend dimensionierten Querelemente wird gewährleistet, daß die gemessenen Dehnungen aus einem Bereich im Meßobjekt stammen, dessen Dehnungen nicht durch den Tragkörper des Meßwertaufnehmers beeinflußt werden. Durch die Kombination der biegesteifen Querelemente mit einem Tragkörper geringer Dehnsteifigkeit wird ein Einstanzen der Querelemente in den Beton verhindert und dadurch sichergestellt, daß die Dehnung des Meßobjektes über die beiden Querelemente dem Tragkörper aufgezwungen wird.

Die Form der Querelemente kann dabei beliebig sein, z.B. stabförmig oder tellerförmig. Sie müssen lediglich so groß dimensioniert sein, daß sie in einen Bereich ragen, der durch den Tragkörper nicht mehr beeinflußt wird.

Vorzugsweise ist der Tragkörper aus Aluminium ausgebildet. Es ist jedoch erfindungsgemäß auch möglich, daß der Tragkörper aus Kunststoff ausgebildet ist. Die Abweichung der Spannungs-Dehnungslinie von der Geraden spielt dabei keine Rolle, solange im Bereich der zu messenden Verformungen keine Entfestigung eintritt, also die Steigung der Spannungs-Dehnungslinie ihr Vorzeichen beibehält.

Zur Übertragung der Dehnung des Tragkörpers können an diesem im mittleren Bereich in Längsrichtung am Umfang aufgeklebte Dehnungsmeßstreifen angeordnet sein. Bei Verwendung von Tragkörpern aus einem Kunststoff, der eine über den Meßbereich konstante Querdehnungszahl aufweist, kann die Längsdehnung auch über Messung der Querdehnung ermittelt werden, wobei erfindungsgemäß zur Übertragung der Dehnungen im mittleren Bereich des Tragkörpers in Umfangsrichtung am Umfang aufgeklebte Dehnungsmeßstreifen angeordnet sind.

Da der Tragkörper als Hohlprofil ausgebildet ist, kann im Hohlprofil eine Saite zur Messung von Verformungen nach dem Prinzip der schwingenden Saite angeordnet sein. Schließlich ist es erfindungsgemäß auch möglich, zur Übertragung der Dehnung im Tragkörper induktive Weggeber auzuordnen.

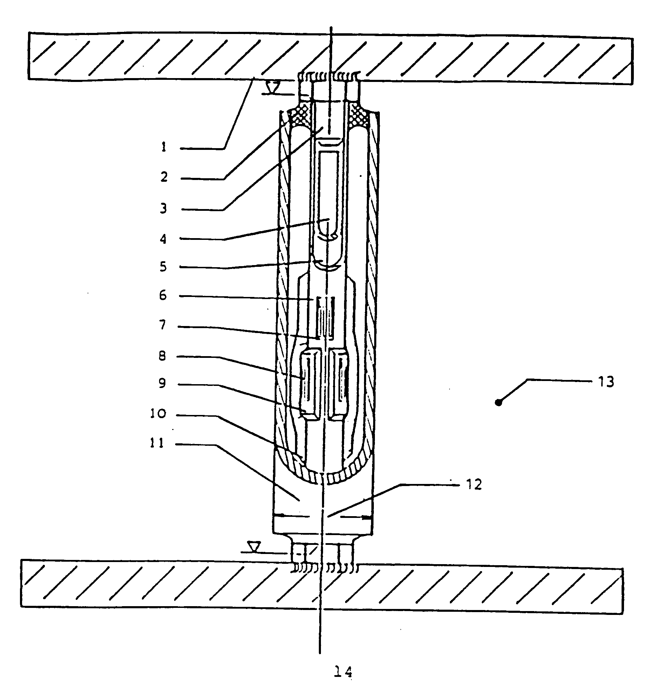

Die Erfindung wird nachfolgend an Hand eines in der Zeichnung dargestellten Ausführungsbeispieles näher erläutert. Die Wahl der Länge des Tragkörpers 6 mit gerader Achse 14 richtet sich nach der Meßaufgabe; besonders bei der Messung in inhomogenen Materialien soll durch eine ausreichend große Meßlänge eine Mittelwertbildung der Dehnung sichergestellt werden. Durch die feste Verbindung des weichen Tragkörpers 6 mit den biegesteifen Querelementen 1 wird gewährleistet, daß dem Tragkörper 6 nur solche Dehnungen aufgezwungen werden, die aus einem Bereich im Meßobjekt 13 stammen, der vom Meßgerät unbeeinflußt ist.

Um ein Knicken des Aufnehmers zu verhindern, wird in das Hohlprofil des Tragkörpers 6 ein anderes Profil 4 aus biegesteifem Material, vorzugsweise Stahl, geschoben, wobei eine Druckübertragung in Längsrichtung zu verhindern ist. Bei dem in der Figur dargestellten Ausführungsbeispiel ist ein kurzer Bolzen 3 mit dem Querbarren 1 fest verbunden. Der Querbarren 1 kann z.B. durch Einkleben des Schaftes des Bolzens 3 in das Hohlprofil des Tragkörpers 6 mit diesem verbunden werden. Zwischen den Bolzen 3 an den Enden des Hohlprofiles des Tragkörpers 6 befindet sich ein Profil 4, dessen Länge so bemessen ist, daß zwischen dem Profil 4 und den Bolzen 3 ein Spalt freibleibt.

Dies ist notwendig, damit sich die Länge des Tragkörpers 6 ungehindert, entsprechend den vom Beton aufgezwungenen Verformungen, ändern kann. Dieses Profil 4 kann auch noch mit einer Kunststoffhülle 5 überzogen werden, um die Schubübertragung am Umfang zu unterbinden.

Auf dem Hohlprofil des Tragkörpers 6 sind außen am Umfang in Längsrichtung Dehnungsmeßstreifen 7 appliziert. Wenn das Hohlprofil des Tragkörpers 6 aus Aluminium besteht, wird dieser in der Regel keine konstante Querdehnungszahl über den gesamten Meßbereich aufweisen, daher sind auch keine Dehnungsmeßstreifen quer zur Hauptdehnungsrichtung angebracht. Zur Kompensation unerwünschter Temperatureinflüsse können temperaturgangkompensierte Dehnungsmeßstreifen verwendet werden. Bei dem in der Fig. dargestellten Ausführungsbeispiel sind zusätzlich Kompensations-Dehnungsmeßstreifen 8 auf einem Plättchen 9, das aus dem gleichen Material wie der Tragkörper 6 besteht, aufgeklebt, wobei keine kraftschlüssige Verbindung mit dem Tragkörper 6 besteht. Die Dehnungsmeßstreifen werden zweckmäßigerweise in Form einer Wheatstone'schen Brücke verschaltet.

Die Dehnungsmeßstreifen sowie sämtliche elektrische Anschlüsse sind mit geeignetem, dauerplastischem Abdeckmaterial 10 gegen Wasserzutritte zu schützen. Als Schutz gegen mechanische Beschädigung dient ein über den Tragkörper 6 geschobenes, starkes Kunststoffrohr 11, dessen Außenkontur eine Querschnittsfläche 12 umschließt. Der verbleibende Ringspalt ist vorzugsweise mit Silikonkautschuk 2 als zusätzlichem Schutz gegen Wasserzutritte verfüllt. Die Ausführung des Meßkabels kann durch diesen Ringspalt erfolgen.

**Patentansprüche**

1. Meßwertaufnehmer zur Messung von Dehnungen in Bauwerken aus Beton mit einem axial beanspruchbaren, geraden, als Hohlprofil ausgebildeten Tragkörper (6), der von einer Hülle (11) umgeben ist und an den mindestens zwei steife Querelemente (1) angeschlossen sind, dadurch gekennzeichnet, daß die Dehnsteifigkeit des Tragkörpers (6) kleiner ist als das Produkt der umschriebenen Hüllenquerschnittsfläche (12) mit dem Elastizitätsmodul des Meßobjektes (13), daß bei zumindest zwei Querelementen (1) deren quer zur Tragkörperachse (14) gemessene Länge größer ist als das 3-fache der Quadratwurzel aus der Hüllenquerschnittsfläche (12) und daß in das Hohlprofil des Tragkörpers (6) ein anderes Profil (4) aus biegesteifem Material, vorzugsweise Stahl, eingeschoben ist, wobei die Gesamtlänge dieses Profiles (4) kürzer als das Hohlprofil des Tragkörpers (6) ist.

2. Meßwertaufnehmer nach Anspruch 1, dadurch gekennzeichnet, daß der Tragkörper (6) aus Aluminium ausgebildet ist.

3. Meßwertaufnehmer nach Anspruch 1, dadurch gekennzeichnet, daß der Tragkörper aus Kunststoff ausgebildet ist.

4. Meßwertaufnehmer nach Anspruch 1 bis 3, dadurch gekennzeichnet, daß zur Übertragung der Dehnung im mittleren Bereich des Tragkörpers (6) in Längsrichtung am Umfang aufgeklebte Dehnungsmeßstreifen (7) angeordnet sind.

5. Meßwertaufnehmer nach Anspruch 3, dadurch gekennzeichnet, daß zur Übertragung der Dehnungen im mittleren Bereich des Tragkörpers (6) in Umfangsrichtung am Umfang aufgeklebte Dehnungsmeßstreifen (7) angeordnet sind.

6. Meßwertaufnehmer nach Anspruch 1 bis 3, dadurch gekennzeichnet, daß im Inneren des Tragkörpers (6) zur Messung von Verformungen nach dem Prinzip der schwingenden Saite eine Saite angeordnet ist.

7. Meßwertaufnehmer nach Anspruch 1 bis 3, dadurch gekennzeichnet, daß zur Übertragung der Dehnungen im Inneren des Tragkörpers (6) induktive Weggeber angeordnet sind.

## Claims

1. A measurement value receiver for the measurement of expansions in structures made of concrete, with a straight supporting body (6), which is able to be stressed axially and is constructed as a hollow section, and which is surrounded by a casing (11) and on which at least two rigid transverse elements (1) are connected, characterised in that the expansion rigidity of the supporting body (6) is less than the product of the circumscribed casing cross-sectional area (12) with the modulus of elasticity of the object of measurement (13), that in the case of at least two transverse elements (1), their length, measured transversely to the axis (14) of the supporting body, is greater than three times the square root of the cross-sectional area (12) of the casing, and that another section (4) of a material resistant to bending, preferably steel, is inserted into the hollow section of the supporting body (6), in which the overall length of this section (4) is shorter than the hollow section of the supporting body (6).

2. A measurement value receiver according to Claim 1, characterised in that the supporting body (6) is constructed from aluminium.

3. A measurement value receiver according to Claim 1, characterised in that the supporting body is constructed from plastics.

4. A measurement value receiver according to Claims 1 to 3, characterised in that wire strain gauges (7) are arranged, to transmit the expansion, in the central region of the supporting body (6) in longitudinal direction, stuck to the periphery.

5. A measurement value receiver according to Claim 3, characterised in that to transmit the expansions, in the central region of the supporting body (6), wire strain gauges (7) are arranged, stuck to the periphery in circumferential direction.

6. A measurement value receiver according to Claims 1 to 3, characterised in that in the interior of the supporting body (6) a string is arranged, for the measurement of deformations in accordance with the vibrating string principle.

7. A measurement value receiver according to Claims 1 to 3, characterised in that to transmit the expansions, inductive displacement pickups are arranged in the interior of the supporting body (6).

## Revendications

1. Dispositif de mesure des déformations dans les constructions en béton, muni d'un corps de support (6) susceptible d'être sollicité axialement, droit et en forme de profilé creux, qui est entouré d'une enveloppe (11) et est fixé à au moins deux éléments transversaux rigides (1), caractérisé en ce que la rigidité à l'allongement du corps de support (6) est inférieure au produit de la surface de la section droite (12) de l'enveloppe qui l'entoure par le module d'élasticité de l'objet à mesurer (13), en ce qu'il comporte au moins deux éléments rigides transversaux (1) dont la longueur mesurée dans une direction perpendiculaire à l'axe (14) du corps de support est supérieure à trois fois la racine carrée de la surface de la section droite de l'enveloppe (12) et en ce qu'est introduit dans le profilé creux du corps de support (6) un autre profilé (4) en un matériau rigide à la flexion de préférence de l'acier, la longueur totale de ce profilé (4) étant inférieure à celle du profilé creux du corps de support (6).

2.   Dispositif de mesure selon la revendication 1, caractérisé en ce que le corps de support est réalisé en aluminium.

3.   Dispositif de mesure selon la revendication 1, caractérisé en ce que le corps de support est réalisé en matière plastique.

4.   Dispositif de mesure selon l'une des revendications 1 à 3, caractérisé en ce que, pour transmettre les déformations, des bandes de mesure des déformations (7), sont disposées dans la zone médiane du corps de support dans la direction longitudinale et collées à la périphérie.

5.   Dispositif de mesure selon la revendication 3, caractérisé en ce que, pour transmettre les déformations, des bandes de mesure des déformations (7) sont disposées dans la zone médiane du corps de support dans la direction périphérique et collées à la périphérie.

6.   Dispositif de mesure selon l'une des revendications 1 à 3, caractérisé en ce qu'une corde est disposée à l'intérieur du corps de support (6) pour mesurer les déformations selon le principe des cordes vibrantes.

7.   Dispositif selon l'une des revendications 1 à 3, caractérisé en ce qu'un capteur de distance inductif est disposé à l'intérieur du corps de support (6) pour transmettre les déformations.